# EUROPEAN PATENT SPECIFICATION

(11) **EP 1 826 242 B1**
(45) Date of publication and mention of the grant of the patent: **11.06.2014**
(21) Application number: 05809153.9
(22) Date of filing: 22.11.2005
(51) Int. Cl.: C08L 77/06, C08K 13/02, F16H 55/06, C08K 7/14, C08K 3/10, C08K 3/16, C08K 5/3492

(54) **POLYAMIDE RESIN COMPOSITION CONTAINING GLASS FIBER**
GLASFASERHALTIGE POLYAMIDHARZZUSAMMENSETZUNG
COMPOSITION DE RESINE POLYAMIDE CONTENANT DE LA FIBRE DE VERRE

(30) Priority: 22.11.2004 JP 2004336979
(43) Date of publication of application: 29.08.2007
(73) Proprietor: Ube Industries, Ltd., Ube-shi, Yamaguchi-ken 755-8633 (JP)
(72) Inventor: ARAKAWA, Seiichi c/o Ube Chemical Factory, Ube-shi, Yamaguchi 7558633 (JP); OGAWA, Tadashi c/o Ube Chemical Factory, Ube-shi, Yamaguchi 7558633 (JP)
(74) Representative: Albrecht, Thomas
(86) International application number: PCT/JP2005/021471
(87) International publication number: WO 2006/054774

(56) References cited:
- EP-A1- 1 024 172
- JP-A- 02 215 858
- JP-A- 10 265 666
- JP-A- 10 265 666
- JP-A- 10 265 666
- JP-A- 57 090 049
- JP-A- 57 090 049
- JP-A- 2000 053 858
- JP-A- 2000 186 199
- JP-A- 2000 186 199
- JP-A- 2005 240 940
- US-A- 5 015 681
- US-A- 5 482 985
- FUKUMOTO O.: 'Polyamide Jushi Handbook, 1st edition' THE NIKKAN KOGYO SHINBUN LTD 1988, page 149
- Translation of JP 2005 240940
- Translation of JP 10 265666

## Description

### FIELD OF THE INVENTION

The present invention relates to a polyamide resin composition containing glass fiber. In particular, the invention relates to a glass fiber-containing polyamide composition which is favorably employable for the manufacture of sliding elements such as gears for an electric power steering (EPS).

### BACKGROUND OF THE INVENTION

Since a polyamide resin shows excellent characteristics as an engineering plastic, the polyamide resin is utilized for manufacture of a variety of machines and elements, for example, manufacture of automobiles, manufacture of machines, manufacture of electric or electronic elements. The polyamide resin is particularly excellent in its mechanical characteristics and abrasion resistance. Therefore, the polyamide resin is widely utilized for molding sliding members such as gears, cams and bearings.

Recently, machines and elements are requested to have more improved performances. Therefore, improvements of the mechanical performances of molded polyamide resin and molding characteristics of polyamide resins have been studied by incorporating a variety of fillers into the polyamide resins. Examples of the fillers include a tetrafluoroethylene resin particle (lubricant) and a glass fiber (reinforcing material).

Japanese Patent Provisional Publication 62-185747 describes a polyamide resin composition advantageously employable for manufacturing sliding members having low friction and good abrasion resistance which a polyamide resin represented by 46-nylon, a polytetrafluoroethylene particle, and optionally potassium titanate and glass fiber. There are given neither general descriptions nor examples with respect to the molecular weight of the polyamide resin. There are also given neither general description no examples with respect to fiber diameter and fiber length.

Japanese Patent Provisional Publication 1-110558 describes a resin composition for sliding members which comprises a polyamide resin represented by 66-nylon (66-polyamide resin), glass fiber, tetrafluoroethylene resin and molybdenum disulfide. It is described that a glass fiber having a fiber diameter of approx. 3 to 13 µm and a fiber length of approx. 1 to 10 mm is used. In the working examples, a glass fiber having a fiber diameter of 13 µm and a fiber length of 3 mm is employed. There are given no general descriptions for the molecular weight of the employed polyamide resin. In the working examples, however, a commercially available polyamide 66 (trade name: CM3001N available from TORAY LIMITED; number average molecular weight: approx. 20,000) is employed.

Japanese Patent Provisional Publication 8-41246 describes a resin composition in which 15 to 30 wt.% of a reinforcing fiber such as a thin glass fiber having a fiber diameter of approx. 6 to 8 µm is incorporated into a thermoplastic resin represented by nylon MXD6 and nylon 66. There is a description to indicate the resin composition is particularly appropriate for the manufacture of a hollow tube having good smoothness on its inner surface. There are given neither general descriptions nor examples with respect to the molecular weight of the polyamide resin.

Japanese Patent Provisional Publication 2003-83423 describes a speed reducing gear manufactured by molding a polyamide resin mixture. There are given, however, no descriptions with respect to incorporation of glass fibers. On the other hand, a commercially available polyamide 66 containing a Cu compound additive (trade name UBE NYLON 2020U, available from UBE INDUSTRIES LTD.; number average molecular weight: 20,000) is employed in the working examples.

Among further prior art, US 5,482,985 and US 5,015,681 describe flameproofed thermoplastic molding materials. Among further prior art, EP 1 024 172 A1 discloses a flame-retardant polyamide composite material with high rigidity. Moreover, JP 2000-186199 and JP 10-265666 disclose a polyamide resin composition for molding, and JP 57-90049 discloses a fiber-reinforced resin composition.

Under requirements for performance improvement of a variety of machines and elements, particularly, for performance improvement of sliding members, particularly gears for an electric power steering (EPS), it is requested that a polyamide resin molded product shows an improved abrasion resistance (which results in decrease of abrasion loss), an improved friction property (which results in decrease of dynamic friction coefficient) and a high pressure-velocity value (which results in a high critical PV value).

### SUMMARY OF THE INVENTION

The present inventors have studied the known molded glass fiber-containing polyamide resin product in its characteristics, particularly, abrasion resistance, friction property and critical PV value. Finally, the inventors have discovered that a molded glass fiber-containing polyamide resin product having excellent abrasion resistance, friction property and critical PV value can be obtained if a glass fiber-containing polyamide resin composition employing a polyamide 66 having a number average molecular weight of 23,000 to 50,000 and a glass fiber having an average fiber diameter of 4 to 8 µm.

The present invention resides in a polyamide resin composition comprising a polyamide 66 having a number average molecular weight of 23,000 to 50,000 in an amount of 45 to 85 wt.% and a glass fiber having an average fiber diameter of 4 to 8 µm in an amount of 50 to 15 wt.% wherein the glass fibers are bound by a binding agent selected from the group, consisting of an acrylic resin, an epoxy resin and a urethane resin.

### EFFECTS OF THE INVENTION

The glass fiber-containing polyamide composition of the invention can be molded by a known manner to give a molded product which shows excellent characteristics, particularly in the abrasion resistance, friction property and critical PV value. Accordingly, the glass fiber-containing polyamide composition of the invention can be favorably employed for manufacture of sliding elements such as gears for the electric power steering (EPS).

### PREFERRED EMBODIMENTS OF THE INVENTION

Preferred embodiments of the glass fiber-containing polyamide resin composition are described below.
(1) The polyamide resin composition further contains 0.0001 to 1 weight part of a copper compound, 0.0001 to 1 weight part of a potassium halide, and 0.0001 to 1 weight part of melamine, based on 100 weight parts of a total of the amount of the polyamide 66 and the amount of the glass fiber.
(2) The number average molecular weight of the polyamide 66 is in the range of 24,000 to 40,000.
(3) The average fiber diameter of the glass fiber is in the range of 5 to 7 µm.
(4) The glass fiber has an average fiber length in the range of 10 to 1,000 µm.
(5) The glass fiber is bound by means of a binding agent comprising an acrylic resin or an epoxy resin.

The polyamide resin employed in the glass fiber-containing polyamide resin composition of the invention is polyamide 66 having a number average molecular weight of 23,000 to 50,000. The polyamide 66 is a known polyamide resin and can be prepared by polycondensation of hexamethylenediamine and adipic acid. The polyamide 66 can be a copolymer containing at most 30 wt.% of monomer components comprising lactam, aminocarboxylic acid or a combination of other diamine and dicarboxylic acid.

Until now, a polyamide 66 employed for the glass fiber-containing polyamide resin composition generally has a number average molecular weight of approx. 20,000, as is described in the aforementioned prior art references. The present invention is characteristic in the use of a polyamide 66 having a higher molecular weight such as a number average molecular weight in the range of 23,000 to 50,000. The polyamide 66 having the higher molecular weight can be easily available on market or can be prepared by adjusting the preparing conditions (for instance, reduction of pressure for the polymerization reaction, or the polycondensate is further subjected to solid polymerization).

The glass fiber-containing polyamide resin composition of the invention comprises the polyamide 66 in an amount of 45 to 85 wt.%.

The glass fiber-containing polyamide resin composition of the invention can contain other thermoplastic resins under such conditions that the incorporation of other thermoplastic resins does not disturb the characteristics of the resin composition of the invention. Examples of the other thermoplastic resins include widely used resins such as polyethylene, polypropylene, ethylene-propylene copolymer, polystyrene, ABS resin, AS resin, and acrylic resin, aliphatic polyamide resins such as polyamide 6 and polyamide 11, and high heat resistance resins such as polycarbonate, polyphenylene oxide, polyethylene terephthalate, polybutylene terephthalate and polyphenylene sulfate. The thermoplastic resins is preferably modified with a modifying agent such as maleic anhydride or a glycidyl group-containing monomer. Particularly, it is preferred that resins having no functional groups, such as polyethylene, polypropylene and ethylene-propylene copolymer, are modified.

The glass fiber incorporated into the glass fiber-containing polyamide resin composition of the invention is a very thin glass fiber having an average fiber diameter of 4 to 8 µm (preferably 5 to 7 µm). The glass fiber preferably has a fiber length in the range of 10 to 1,000 µm, more preferably 50 to 500 µm. The glass fiber is bound by means of a known binding agent (binder) comprising acrylic resin, epoxy resin or urethane resin. Preferred are glass fibers bound with a binding agent comprising acrylic resin or epoxy resin. The glass fiber is preferably subjected to pretreatment using a coupling agent such as an isocyanate compound, an organic silane compound, an organic titanate compound, an organic borane compound, or an epoxy compound. The use of the pre-treated glass fiber is effective to further improve mechanical characteristics of the molded product.

The glass fiber-containing polyamide resin composition of the invention comprises the glass fiber in an amount of 15 to 50 wt.%, preferably 20 to 40 wt.%.

The glass fiber-containing polyamide resin composition of the invention preferably contains a copper compound showing oxidation inhibition activity. Examples of the employable copper compounds include copper salts of inorganic acids, such as copper(I) chloride, copper(II) chloride, copper(I) bromide, copper(II) bromide, copper(I) iodide (copper iodide), copper sulfate, copper phosphate, copper borate and copper nitrate, and copper salts of organic acids, such as copper acetate, copper propionate, copper benzoate, copper adipate, copper terephthalate, copper isophthalate and copper stearate. A copper complex compound having chelate groups can be employed. Most preferred is copper(I) iodide. The copper compounds can be employed singly or in combination.

The copper compound is preferably employed in an amount of 0.0001 to 1 weight part per 100 weight parts of the total of the amounts of polyamide 66 and glass fiber. More preferably is 0.005 to 0.2 weight part, and most preferably is 0.02 to 0.1 weight part.

It is preferred that the glass fiber-containing polyamide resin composition of the invention further contains a potassium halide. Examples of the potassium halides include potassium iodide, potassium bromide, and potassium chloride. Most preferred is potassium iodide. The potassium halide is preferably employed in an amount of 0.0001 to 1 weight part per 100 weight parts of the total of the amounts of polyamide 66 and glass fiber. More preferably is 0.005 to 0.2 weight part, and most preferably is 0.02 to 0.1 weight part.

It is preferred that the glass fiber-containing polyamide resin composition of the invention further contains melamine in an amount of 0.0001 to 1 weight part per 100 weight parts of the total of the amounts of polyamide 66 and glass fiber. More preferably is 0.005 to 0.2 weight part, and most preferably is 0.02 to 0.1 weight part.

If necessary, the glass fiber-containing polyamide resin composition of the invention may contain known additives for polyamide resins, such as other heat resisting agents, anti-weather agents, crystal nuclei-forming agents, crystallization accelerators, releasing agents, lubricants, anti-static agents, flame retardants, auxiliary flame retardants, and coloring agents.

The glass fiber-containing polyamide resin composition of the invention can be prepared by melting and kneading a mixture of a polyamide 66 having the determined number average molecular weight and a glass fiber having the determined average fiber diameter in a known kneader such as a mono- or bi-axial kneading extruder or a banbury mixer according to a known procedure. In the procedure of melting and kneading, the above-mentioned additives may be added.

The glass fiber-containing polyamide resin composition of the invention can be converted into a molded product such as sliding elements (e.g., gear) or products of other forms, by known molding methods such as extrusion molding, blow molding, and injection molding. The glass fiber-containing polyamide resin composition of the invention can be favorably employed for the manufacture of gears, pulleys, cams, and bearings of automobiles and machines. The glass fiber-containing polyamide resin composition of the invention can be also employed for the manufacture of other molded products.

### Examples

The physical characteristics of the molded products described in Examples and Comparison Examples were determined by the below-mentioned procedures.

### [Molecular weight]

The average molecular weight of the polyamide 66 in the specification means a number average molecular weight, which is measured in aqueous sulfuric acid (con-centration: 96%) by a solution viscosity method according to JIS K6920.

### [Measurements of mechanical characteristics]

### (1) Tensile strength and elongation

A test piece (thickness 3.2 mm) is subjected to measurement at an ordinary temperature (23°C) according to ASTM D638.

### (2) Flexural strength and flexural modulus

A test strip (thickness 6.4 mm) is subjected to three-point bending test at an ordinary temperature (23°C) according to ASTM D790.

### (3) Impact strength (Izod impact strength)

A test strip (thickness 12.7 mm, with a notch given by after treatment) is subjected to measurement in an Izod impact tester at an ordinary temperature (23°C) according to ASTM D256.

### (4) Hardness

A test piece (thickness 6.4 mm, width 12.7 mm, length 127 mm) is subjected to measurement by means of a Rockwell hardness tester at an ordinary temperature (23°C) according to ASTM D785.

### (5) Heat deformation temperature (deflection temperature under load)

A test piece (thickness 12.7 mm, width 12.7 mm, length 127 mm) is subjected to measurement by means of a tester for measurement of deflection temperature under load at an ordinary temperature (23°C) according to ASTM D648.

### [Evaluation of sliding property]

### (1) Critical PV value

The measurement is made by means of a Suzuki type-friction-abrasion tester under ring-on-plate system (size of plate: width 30 mm, thickness 3 mm, length 100 mm) according to JIS K7218 (except the test load and test speed). The test speed is 200 mm/sec. The test load is first 10 kgf, and is increased by 10 kgf at every 10 min., to cause a melt of the test sample. The load just before the occurrence of melting is the critical PV value.

### (2) Dynamic friction coefficient

The measurement is made by the above-mentioned tester for the measurement of critical PV value in the same manner. The frictional resistance just before the occurrence of melting is measured. The measured frictional resistance is processed to give the dynamic friction coefficient.

### (3) Amount of abrasion

The abrasion test is performed using the above-mentioned tester for the measurement of critical PV value. The test is carried out first using a load of 1 kgf, second the load is replaced with 2 kgf load after 10 min., and third the load is replaced with 1 kgf after 10 min. In other words, the load is repeatedly changed from 1 kgf to 2 kgf at a lapse of 10 min. The test is performed for 200 min. in total. Then, the abrasion on the test piece is then measured.

### [Heat aging characteristics (retention of tensile strength, retention of elongation, variation of critical PV value and dynamic friction coefficient)

### (1) Retention of tensile strength and retention of elongation

A test piece is placed in a hot air-circulating thermo-hygrostat (available from Satake Chemical Machine Industry Co., Ltd.) heated to 180°C (inner temperature) for 500 hours. Thus heat-treated test piece is subjected to the aforementioned measurement of tensile strength and elongation to determine the retention of tensile strength and retention of elongation.

### (2) Variation of critical PV value and dynamic friction coefficient

A test piece is placed in a hot air-circulating thermo-hygrostat (available from Satake Chemical Machine Industry Co., Ltd.) heated to 180°C (inner temperature) for 500 hours. Thus heat-treated test piece is subjected to the aforementioned measurement of critical PV value and dynamic friction coefficient.

### [Example 1]

Polyamide 66 (number average molecular weight: 26,000, 2026B available from Ube Industries, Ltd., 75 weight parts), glass fiber (average fiber diameter: 6.5 µm, binder: acrylic resin, ECS03T-289DE, available from Nippon Electric Glass Co., Ltd., 25 weight parts), copper (I) iodide (0.02 weight part), potassium iodide (0.32 weight part), and melamine resin (0.01 weight part) were kneaded in a biaxial extruder (with 44 mmφ vent, heated to 285°C (barrel temperature)) and pelletized to give pellets of a polyamide resin composition.

The resulting polyamide resin composition pellets were dried at 100°C under a reduced pressure (10 torr (1330 Pa)) for 24 hours, and was processed by injection molding (cylinder temperature 285°C, mold temperature 80°C) to give test pieces. The test pieces were subjected to the aforementioned various measurements and determinations. The results are set forth in Table 1.

### [Example 2]

The procedures of Example 1 were repeated except that a different glass fiber (average fiber diameter: 6.5 µm, binder: epoxy resin, ECS03T-790DE, available from Nippon Electric Glass Co., Ltd.) was employed, to give pellets of the polyamide resin composition and test pieces. The results are set forth in Table 1.

### [Example 3]

The procedures of Example 1 were repeated except that a different glass fiber (average fiber diameter: 6.5 µm, binder: urethane resin, ECS03T-488DE, available from Nippon Electric Glass Co., Ltd.) was employed, to give pellets of the polyamide resin composition and test pieces. The results are set forth in Table 1.

### [Comparison Example 1]

The procedures of Example 1 were repeated except that a different glass fiber (average fiber diameter: 13 µm, binder: acrylic resin, ECS03T-289, available from Nippon Electric Glass Co., Ltd.) was employed, to give pellets of the polyamide resin composition and test pieces. The results are set forth in Table 1.

### [Comparison Example 2]

The procedures of Example 1 were repeated except that a different polyamide 66 (number average molecular weight: 20,000, 2020U available from Ube Industries, Ltd.) was employed, to give pellets of the polyamide resin composition and test pieces. The results are set forth in Table 1.

### [Comparison Example 3]

The procedures of Example 1 were repeated except that a different polyamide 66 (number average molecular weight: 20,000, 2020U available from Ube Industries, Ltd.) and a different glass fiber (average fiber diameter: 13 µm, binder: acrylic resin, ECS03T-289, available from Nippon Electric Glass Co., Ltd.) were employed, to give pellets of the polyamide resin composition and test pieces. The results are set forth in Table 1.

**Table 1**

| | Example | | | Com. Ex. | | |
|---|---|---|---|---|---|---|
| | 1 | 2 | 3 | 1 | 2 | 3 |
| Tensile strength | | | | | | |
| (MPa) | 187 | 182 | 181 | 160 | 179 | 159 |
| Retention | | | | | | |
| (%) | 100 | --- | --- | 90 | 95 | 88 |
| Elongation | | | | | | |
| (%) | 5.3 | 5 | 5 | 4 | 5 | 4 |
| Retention | | | | | | |
| (%) | 88 | -- | -- | 70 | 76 | 65 |
| Flexural strength | | | | | | |
| (MPa) | 265 | 260 | 255 | 225 | 260 | 224 |
| Flexural modulus | | | | | | |
| (GPa) | 7.5 | 7.6 | 7.6 | 7.1 | 7.4 | 7.1 |
| Impact strength | | | | | | |
| (J/m) | 125 | 103 | 101 | 64 | 118 | 64 |
| Hardness | | | | | | |
| (HR-R) | 122 | 122 | 122 | 120 | 121 | 120 |
| Heat deformation temperature | | | | | | |
| (°C) | 253 | 254 | 249 | 251 | 250 | 248 |
| Critical PV value | | | | | | |
| (kg/cm²·cm/s) | | | | | | |
| | 2000 | 2200 | 2100 | 1100 | 1600 | 800 |
| After heat treatment | | | | | | |
| | 2300 | ---- | ---- | 1850 | 1900 | 1200 |
| Dynamic friction coefficient | | | | | | |
| | 0.13 | 0.11 | 0.12 | 0.25 | 0.18 | 0.32 |
| After treatment | | | | | | |
| | 0.11 | ---- | ---- | 0.15 | 0.14 | 0.17 |
| Amount of abrasion (x 10⁻⁸mm³/kg·mm) | | | | | | |
| | 11 | 9 | 10 | 16 | 12 | 18 |

As is evident from the results set forth in Table 1, the molded products prepared from the polyamide resin compositions of the invention show a high tensile strength, high retention of the tensile strength, high elongation, high retention of the elongation, and high flexural modulus.

In particular, the molded products prepared from the polyamide resin compositions of the invention show high critical PV value, retention of the high critical PV value after heat treatment, low dynamic friction coefficient, and retention of the low dynamic friction coefficient after heat treatment. Further,the molded products prepared from the polyamide resin compositions of the invention show a small abrasion amount in the abrasion test.

Furthermore, the molded products prepared from the polyamide resin compositions of the invention show equal or superior values in other various characteristics to the molded products prepared from the conventional polyamide resin compositions.

## Claims

1. A polyamide resin composition comprising a polyamide 66 having a number average molecular weight of 23,000 to 50,000 in an amount of 45 to 85 wt.% and glass fibers having an average fiber diameter of 4 to 8 µm in an amount of 50 to 15 wt.%, wherein the glass fibers are bound by a binding agent selected from the group consisting of an acrylic resin, an epoxy resin and a urethane resin.

2. The polyamide resin composition of claim 1, which further contains 0.0001 to 1 weight part of a copper compound, 0.0001 to 1 weight part of a potassium halide, and 0.0001 to 1 weight part of melamine, based on 100 weight parts of a total of the amount of the polyamide 66 and the amount of the glass fiber.

3. The polyamide resin composition of claim 1, wherein the number average molecular weight of the polyamide 66 is in the range of 24,000 to 40,000.

4. The polyamide resin composition of claim 1, wherein the average fiber diameter of the glass fiber is in the range of 5 to 7 µm.

5. The polyamide resin composition of claim 1, wherein the glass fiber has an average fiber length in the range of 10 to 1,000 µm.

6. The polyamide resin composition of claim 1, wherein the binding agent comprises an acrylic resin or an epoxy resin.

7. A molded article made by molding the polyamide resin composition of claim 1.

8. A gear made by molding the polyamide resin composition of claim 1.

## Patentansprüche

1. Polyamidharzzusammensetzung, umfassend ein Polyamid-66 mit einem zahlenmittleren Molekulargewicht von 23.000 bis 50.000 in einer Menge von 45 bis 85 Gew.-% sowie Glasfasern mit einem durchschnittlichen Zahlendurchmesser von 4 bis 8 µm in einer Menge von 50 bis 15 Gew.-%, wobei die Glasfasern durch ein Bindemittel gebunden sind, ausgewählt aus der Gruppe, bestehend aus einem Acrylharz, einem Epoxyharz und einem Urethanharz.

2. Polyamidharzzusammensetzung gemäß Anspruch 1, die des Weiteren 0,0001 bis 1 Gewichtsteil(e) einer Kupferverbindung, 0,0001 bis 1 Gewichtsteil(e) eines Kaliumhalogenids und 0,0001 bis 1 Gewichtsteil(e) Melamin enthält, bezogen auf 100 Gewichtsteile einer Gesamtheit der Menge an Polyamid-66 und der Menge an Glasfaser.

3. Polyamidharzzusammensetzung gemäß Anspruch 1, wobei das zahlenmittlere Molekulargewicht des Polyamid-66 in dem Bereich von 24.000 bis 40.000 liegt.

4. Polyamidharzzusammensetzung gemäß Anspruch 1, wobei der durchschnittliche Faserdurchmesser der Glasfaser in dem Bereich von 5 bis 7 µm liegt.

5. Polyamidharzzusammensetzung gemäß Anspruch 1, wobei die Glasfaser eine durchschnittliche Faserlänge in dem Bereich von 10 bis 1.000 µm besitzt.

6. Polyamidharzzusammensetzung gemäß Anspruch 1, wobei das Bindemittel ein Acrylharz oder ein Epoxyharz umfasst.

7. Formgegenstand, hergestellt durch Formgießen der Polyamidharzzusammensetzung gemäß Anspruch 1.

8. Antriebsritzel, hergestellt durch Formgießen der Polyamidharzzusammensetzung gemäß Anspruch 1.

## Revendications

1. Composition de résine de polyamide comprenant un polyamide 66 ayant un poids moléculaire moyen en nombre de 23 000 à 50 000 en une quantité de 45 à 85 % en poids et des fibres de verre ayant un diamètre de fibre moyen de 4 à 8 µm en une quantité de 50 à 15 % en poids, dans laquelle les fibres de verre sont liées par un agent de liaison choisi dans le groupe constitué par une résine acrylique, une résine époxy et une résine d'uréthane.

2. Composition de résine de polyamide selon la revendication 1, qui comprend en outre de 0,0001 à 1 partie en poids d'un composé à base de cuivre, de 0,0001 à 1 partie en poids d'un halogénure de potassium et de 0,0001 à 1 partie en poids de mélamine, par rapport à 100 parties en poids d'un total de la quantité du polyamide 66 et de la quantité de la fibre de verre.

3. Composition de résine de polyamide selon la revendication 1, dans laquelle le poids moléculaire moyen en nombre du polyamide 66 est compris dans la plage allant de 24 000 à 40 000.

4. Composition de résine de polyamide selon la revendication 1, dans laquelle le diamètre de fibre moyen de la fibre de verre est compris dans la plage allant de 5 à 7 µm.

5. Composition de résine de polyamide selon la revendication 1, dans laquelle la fibre de verre a une longueur de fibre moyenne comprise dans la plage allant de 10 à 1000 µm.

6. Composition de résine de polyamide selon la revendication 1, dans laquelle l'agent de liaison comprend une résine acrylique ou une résine époxy.

7. Article moulé préparé par moulage de la composition de résine de polyamide selon la revendication 1.

8. Engrenage préparé par moulage de la composition de résine de polyamide selon la revendication 1.
